## Europäisches Patentamt

(19) **European Patent Office**

**Office européen des brevets**

(11) Numéro de publication: **0 268 536**
**B1**

(12) **FASCICULE DE BREVET EUROPEEN**

(45) Date de publication du fascicule du brevet:
**21.03.90**

(21) Numéro de dépôt: **87420270.8**

(22) Date de dépôt: **06.10.87**

(51) Int. Cl.⁴: **B62B 5/02**

(54) **Chariot articulé tous-terrains et polyvalent.**

(30) Priorité: **09.10.86 FR 8614210**

(43) Date de publication de la demande:
**25.05.88 Bulletin 88/21**

(45) Mention de la délivrance du brevet:
**21.03.90 Bulletin 90/12**

(84) Etats contractants désignés:
**AT BE CH DE ES GB IT LI NL**

(56) Documents cités:
**EP-A- 0 056 490**
**DE-B- 1 084 143**
**FR-A- 2 070 923**
**GB-A- 891 531**
**US-A- 4 290 618**

(73) Titulaire: **Levet, Joannès, 30, rue Henry Duhamel,
F-38100 Grenoble(FR)**

(72) Inventeur: **Levet, Joannès, 30, rue Henry Duhamel,
F-38100 Grenoble(FR)**

ACTORUM AG

## Description

La présente invention concerne un chariot articulé, tous terrains, type 2 roues, à traction manuelle, pour le transport ou la manutention et conçu pour être réellement utilisable sans difficulté dans les escaliers ou sur un sol bosselé ou inégal, alors que les chariots existants ne sont utilisables de manière satisfaisante que sur un sol plat ou en présence de faibles obstacles.

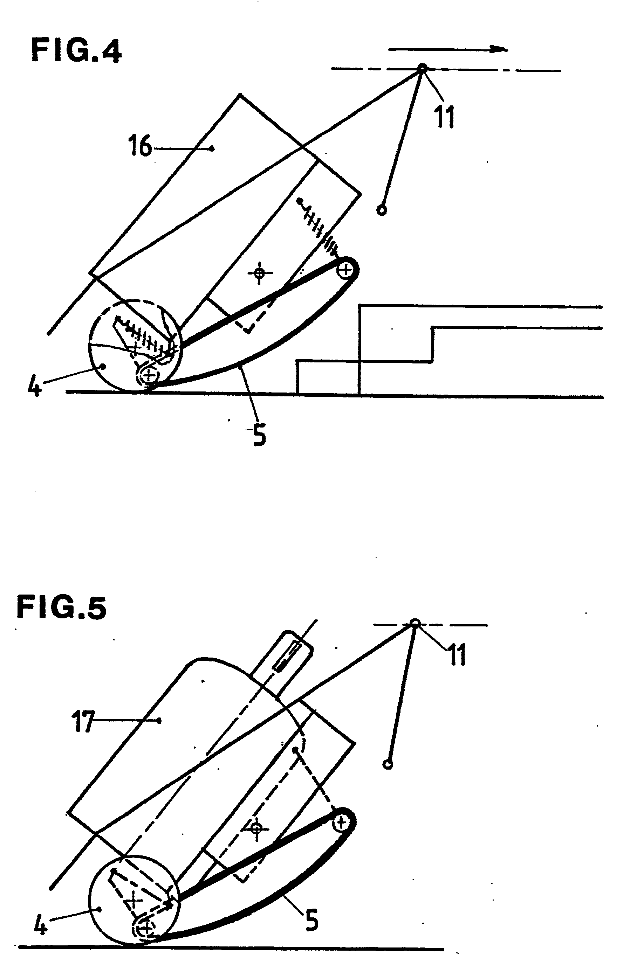

La géométrie de fonctionnement de ce chariot articulé est bien défini par les figures 4, 5, 6 et 7.

Quand nous parlons de chariot, nous entendons un chariot à deux roues et, plus précisément, à un essieu. Comme exemple de chariot à un essieu, nous prendrons les chariots légers, actuellement utilisés par les ménagères pour faire leurs courses. Ces chariots sont quelques fois appelés poussettes.

Ces chariots sont de 2 types :
- 1er type : Le chariot comporte 2 roues, une de chaque côté du châssis portant le sac à provision. Ce chariot convient très bien sur un sol plat. Par contre, s'il se présente un rebord de trottoir ou quelques marches d'escalier, entrée d'immeuble, par exemple, les roues se bloquent sur l'obstacle et il faut soulever le chariot. Ce type de chariot est bien connu.
- 2ème Type : Le chariot comporte, de chaque côté du châssis porte-sac, 3 roues en étoile ayant un axe de pivotement commun. Comme exemple de chariot de ce type, on peut citer le brevet FR-A-2 070 923. Sur un sol plat, le chariot se comporte correctement, avec 2 roues au sol de chaque côté.

En présence d'un bord de trottoir ou d'une marche isolée, le système fonctionne bien : les deux roues qui sont à l'avant se bloquent sur la face verticale de l'obstacle, l'ensemble en étoile pivote autour de son axe et l'obstacle est "avalé" sans difficulté.

Par contre, si l'on doit monter un ou plusieurs étages d'escaliers (immeubles sans ascenseur) le système fonctionne mal : il faut franchir les marches une à une, il y a des à-coups dans la progression, la montée est lente et bruyante, ce qui fait que très rapidement, on est amené à porter le chariot comme un sac, ce qui est un non-sens.

Par ailleurs, il a été proposé, pour des chariots destinés à monter les escaliers, d'autres systèmes de roulement, certains utilisant des courroies ou chenilles.

En premier exemple d'un de ces systèmes, nous citerons la demande de brevet EP-A 0 056 490. Ce chariot comporte deux courroies de roulement, lisses ou crantées. Ces courroies sont rectilignes dans la partie utile, c'est à dire la partie qui est face à l'obstacle à franchir, ce qui a pour conséquence, dans le cas où les marches ne sont pas strictement identiques, d'amener la partie avant des courroies à buter sur l'arête de la marche à franchir. Ceci est encore plus évident si l'on veut utiliser ce chariot dans des escaliers rustiques constitués par des rondins de bois, comme il en existe dans les châlets de montagne.

De plus, il est nécessaire, avant utilisation, de régler manuellement la position du châssis inférieur, portant les courroies, par rapport au corps du chariot (châssis supérieur), en fonction de la pente de l'escalier. Ce réglage s'obtient en faisant pivoter le châssis inférieur, portant les courroies, autour de l'axe du galet de renvoi inférieur des dites courroies, puis ce châssis inférieur est immobilisé dans cette position. Il s'ensuit que le chariot est monobloc en cours d'utilisation. Il faut donc procéder à autant de réglages successifs qu'il se présente d'obstacles différents.

En deuxième exemple nous citerons le brevet DE-B 1 084 143 qui utilise le même principe de fonctionnement que le brevet précédent et qui nécessite le même réglage préalable.

Les particularités qui viennent d'être citées: courroies rectilignes dans leur partie utile, chariot monobloc en cours d'utilisation, obligation d'un règlage manuel en fonction des obstacles rencontrés, impossibilité d'oscillation ou de pivotement du châssis inférieur par rapport au châssis supérieur en cours d'utilisation, empêchent une progression régulière et continue du chariot quand les obstacles à franchir varient en forme ou en dimension.

Dans l'ensemble des systèmes actuels proposant l'utilisation des courroies on peut également citer le brevet US-A 4 290 618 qui présente les mêmes inconvénients.

Le point commun de tous ces systèmes est qu'ils se révèlent peu pratiques, compliqués et qu'ils ne répondent qu'imparfaitement au but recherché. Il semble que cet échec relatif soit dû à une mauvaise étude des conditions géométriques à remplir pour obtenir un fonctionnement correct dans tous les cas d'utilisation.

Le but de la présente invention est de remédier à ces inconvénients en réalisant un chariot articulé, tous terrains, apte à franchir les marches d'escaliers, aussi bien en montée qu'en descente et qui, sur sol plat, se comporte comme un chariot habituel, ceci étant obtenu sans nécessiter de réglages manuels pour positionner les deux châssis l'un par rapport à l'autre, quels que soient les obstacles rencontrés.

Il est bien évident que si le chariot peut franchir correctement des marches d'escaliers, il franchira tout aussi bien des obstacles moins importants. De plus, les obstacles rencontrés par le chariot ne devront pas empêcher une progression réguliers du chariot, ni provoquer de chocs préjudiciables aux objets transportés.

Pour arriver à ce résultat, il a été conçu un chariot original, suivant la présente invention, telle qu'elle est caractérisée dans les revendications, invention qui résout le problème du franchissement des obstacles sans qu'il soit nécessaire de procéder à un réglage de la partie roulante.

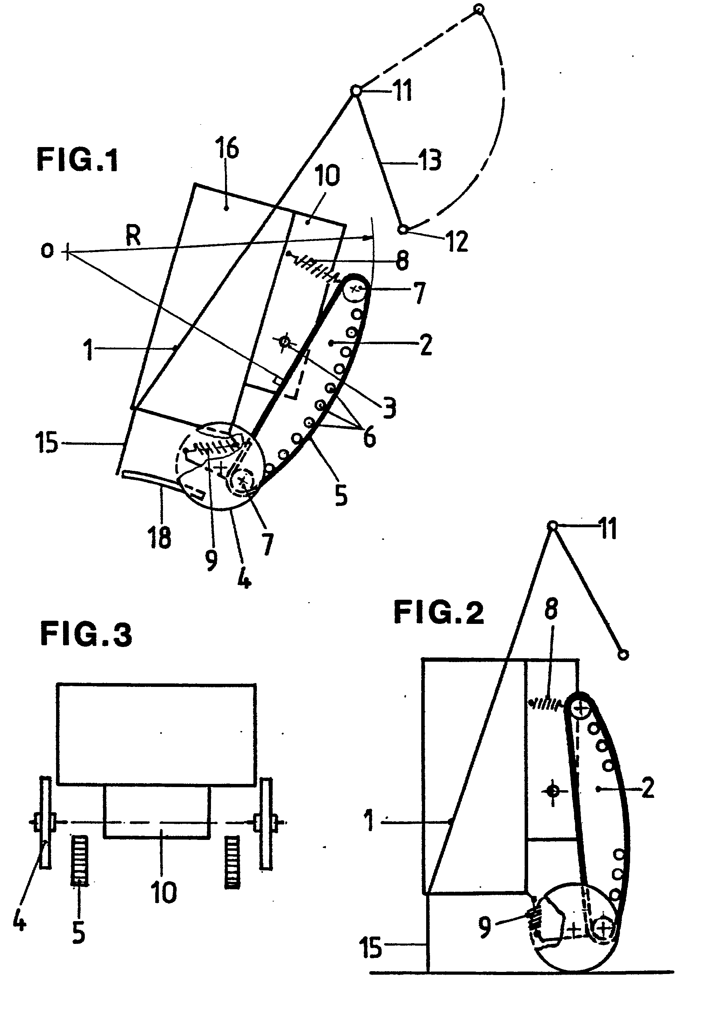

Ce chariot, Fig. 1, est composé de 2 éléments:

1. Un châssis supérieur (1) similaires aux chariots existants. Ce châssis reçoit la charge. Il ne comporte pas de roues.

2. Un châssis inférieur (2) oscillant par rapport au châssis supérieur (1). L'oscillation est obtenue grâce à un axe d'oscillation commun (3) sur lequel sont articulés les deux châssis, qui peuvent donc pivoter l'un par rapport à l'autre pendant le déplacement du chariot.

Le châssis inférieur (2) comporte deux roues latérales (4) et deux courroies (5) lisses ou crantées. Dans le cas de courroies crantées, les crans se trouvent à l'extérieur et le terme courroies crantées peut être remplacé par le terme chenille. Ces deux courroies ou chenilles (5) sont disposées latéralement, suivant un profil curviligne indéformable; en exemple non limitatif de profil curviligne, on peut citer: arc de cercle, ellipse, branche de parabole. Dans le cas où, comme profil curviligne, on choisit un arc de cercle de rayon R et de centre O, cet arc de cercle constitue une portion de grande roue qui aurait pour rayon: R et pour centre: O - Fig. 1 et 8.

Les courroies ou chenilles (5) sont maintenues sur ce profil curviligne par des rouleaux-supports (6) situés à l'intérieur du profil des courroies. Ces courroies sont renvoyées, en fin de profil, par des galets (7).

Les parois latérales des chapes (ou ce qui en tient lieu) des rouleaux-supports (6) sont prolongées, de sorte qu'elles servent de guidage latéral à la courroie.

Du fait de la conception, suivant la présente invention qui vient d'être exposée, les courroies ou chenilles (5) servent de chemins de roulement interposés entre le chariot et les obstacles.

Les courroies ou chenilles (5) peuvent être réalisées en caoutchouc, matières plastiques ou être constituées par des éléments métalliques. Elles peuvent être lisses ou crantées, les crans étant à l'extérieur. Dans le cas de courroies crantées, on peut utilisé les courroies de transmission en usage dans l'industrie. Ces courroies sont alors retournées pour avoir les crans à l'extérieur.

Les deux courroies latérales décrites ci-dessus peuvent être remplacées par une seule courroie centrale. Dans le cas de charge importante, ou pour toute autre raison, on monte au contraire un nombre de courroies supérieur à deux.

Dans le cas où le profil curviligne choisi est un arc de cercle, le centre d'oscillation (3) du châssis inférieur (2) par rapport au châssis supérieur (1) sera situé, de préférence, en avant de la perpendiculaire abaissée du centre O sur la partie rectiligne de la courroie. Ce centre d'oscillation (3) reste néanmoins à l'intérieur du cercle de rayon R et de centre O, Fig. 1.

La valeur de R et les positions relatives de O et de (3) sont choisies de telle sorte que la flèche f déterminée par la portion d'arc de rayon R coupée par la droite joignant les crêtes des marches d'escaliers soit peu importante. De ce fait, la valeur du débattement vertical du chariot sera faible également, Fig. 8.

Dans le cas d'un profil curviligne autre qu'un arc de cercle, ce profil sera choisi de sorte que la flèche f demeure peu importante.

Il est à remarquer que le centre commun d'oscillation (3) des deux châssis (1) et (2) est géométriquement distinct des axes des rouleaux-supports (6) des axes des galets (7) et des axes des roues (4), ce centre (3) est positionné indépendamment de ces axes.

Les courroies sont disposées entre les roues (4), côté intérieur, Fig. 3. D'autre part, la partie de la courroie du côté roue (4), est située à l'intérieur du profil de ladite roue, de sorte que, que sur un sol plat, les roues (4) sont seules en contact avec le sol, les courroies ne touchant pas celui-ci, Fig. 4 et 5. Les courroies (5) n'entrent en action que s'il y a un obstacle, même faible, à franchir, Fig. 6 et 7.

Les 2 châssis sont articulés, comme dit précédemment, sur un axe commun (3) de sorte que le châssis inférieur (2) oscille, par rapport au châssis supérieur (1), en épousant le profil du trajet, alors que le châssis supérieur (1) évolue suivant une trajectoire bien moins tourmentée.

La traction de l'ensemble se fait par l'intermédiaire du châssis supérieur (1).

Un système de ressorts de rappel (8) et (9), à action composite, contrôle le débattement du châssis inférieur (2) et le ramène constamment dans la position convenable par rapport au châssis (1) et par rapport à l'obstacle à franchir. Ce système assure également la suspension de la charge, Fig. 1, 4, 5, 6 et 7.

Un vide-poche (10), solidaire du châssis supérieur (1) s'insère entre les courroies (5), Fig. 1 et 3.

Le chariot est équipé de deux poignées de traction, solidaires du châssis supérieur (1), Fig. 1 :

a) Une poignée fixe (11) utilisée pour les déplacements sur le sol plat ou peu accidentée (rebord de trottoir, marches isolées), Fig. 4, 5 et 6.

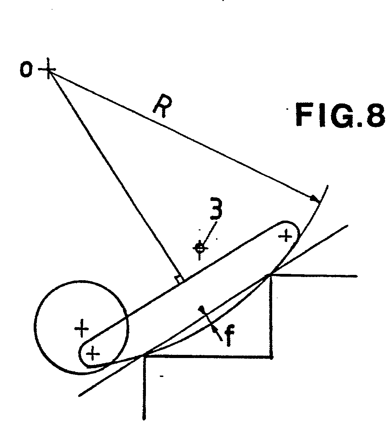

b) Une poignée (12) est montée sur un bras mobile (13) éclipsable, pivotant ou non autour de la poignée fixe (11). Ce bras mobile (13) est encliquetable par rapport à la poignée fixe (11), Fig. 7 (14). Ce bras devient alors fixe par rapport au châssis supérieur (1), Fig. 7.

L'adaption de cette deuxième poignée (12) est rendue nécessaire par le fait qu'en position escalier, l'utilisateur du chariot n'est pas à la même hauteur que celui-ci. Il est donc nécessaire de compenser les différences de niveaux.

Bien entendu, le corps de ces deux poignées, de forme anatomique, peut tourillonner sur son axe pour une meilleure préhension de l'utilisateur.

Pour charger le chariot, il suffit de l'amener en position verticale, en élevant la poignée fixe (11). Sous l'action des ressorts (8) et (9) le châssis inférieur (2) s'écarte du châssis supérieur (1) qui est muni d'un pied (15) et l'ensemble, s'ouvrant comme un compas, assure la stabilité, Fig. 2.

Les 2 poignées (11) et (12) peuvent être remplacées par une poignée unique, montée sur un bras réglable et encliquetable sur deux positions, de telle sorte que la poignée unique puisse, selon l'utilisation, occuper la position (11) ou la position (12).

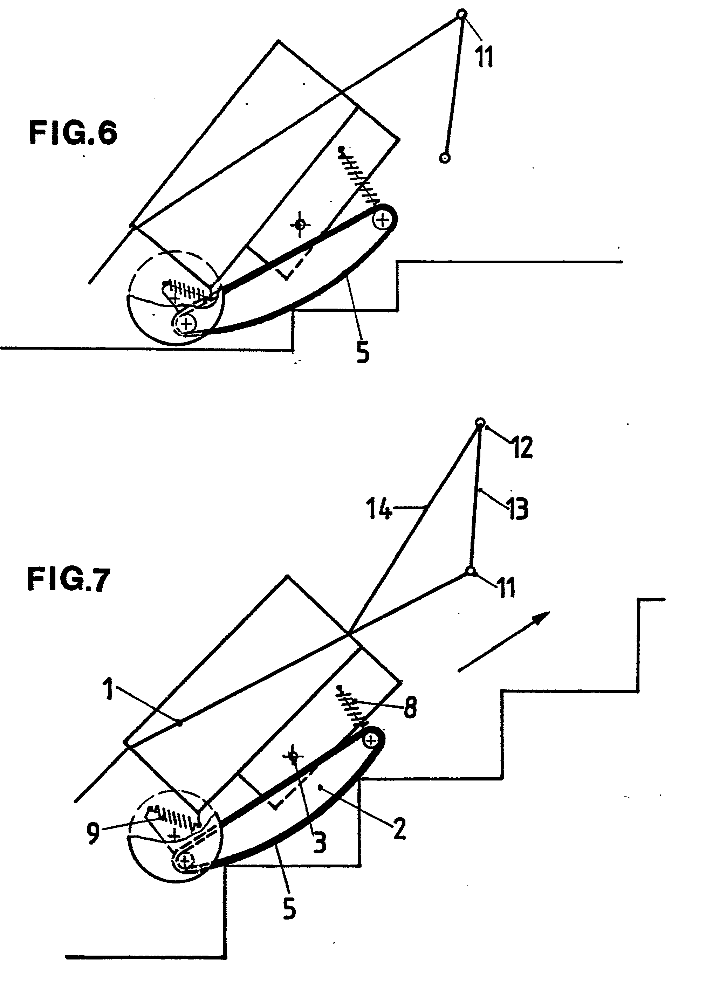

Dans la version du chariot à usage ménager, la conception de l'appareil est telle, qu'en enlevant le sac à provision (16), on peut installer à la place une bouteille de butane (17) et ceci sans déformer le châssis, Fig. 4 et 5.

On adjoint à l'arrière du chariot, deux patins (18) qui permettent de descendre une ou deux marches sans avoir à retourner le chariot. Fig. 1.

Les rouleaux-supports (6) de la courroie ou chenille (5) peuvent être montés sur des blocs amortisseurs. Cet amortissement peut être reporté sur l'axe (3).

D'après ce qui vient d'être exposé précédemment, il est clair que la partie basse du chariot inférieur (2) doit être constituée par deux bandes ou zônes curvilignes indéformables qui assurent le déplacement sur les marches ou sur les obstacles. La géométrie de ces bandes ou zones important seule, celles-ci sont susceptibles d'être obtenues de différentes façons.

Dans la première forme d'exécution suivant la présente invention, décrite précédemment, le profil curviligne est obtenu par une courroie (5) supportée par des rouleaux-supports (6).

Dans une deuxième forme d'exécution du chariot suivant la présente invention, la courroie (5) est supportée par un chemin à aiguilles ou à galets, mobile ou non. Par chemin mobile, nous entendons un dispositif à circulation d'aiguilles ou de galets comme il s'en emploie dans l'industrie. Le but de ce montage est de diminuer la valeur des frottements.

Dans une troisième forme d'exécution du chariot suivant la présente invention, la courroie (5) est supportée par un patin curviligne dont le profil extérieur est semblable au profil intérieur de la courroie. La courroie glissera sur ce patin.

Dans une quatrième forme d'exécution du chariot suivant la présente invention, la courroie (5) est remplacée par un patin ayant le même profil extérieur que celle-ci. Le système se comporte alors comme un traineau, on a un glissement sur l'obstacle au lieu d'avoir un roulement. Le principe du déplacement grâce à une bande ou zone curviligne est respecté et l'ensemble demeure efficace. Ce montage est destiné au transport de charges légères.

Dans une cinquième forme d'exécution du chariot suivant la présente invention, l'ensemble du châssis inférieur oscillant (2) y compris son axe d'oscillation (3) est construit en un élément indépendant, de façon à être fixé, provisoirement ou définitivement, sur un quelconque objet ou charge à déplacer.

Dans une sixième forme d'exécution, suivant la présente invention, chacun des deux ensembles latéraux du système de roulement, comprenant : axe d'oscillation (3), roue (4), courroie (5), rouleaux-supports (6), galets (7), ressorts (8) et (9), le tout fixé sur la partie correspondante du châssis (2), dont les entretoises sont supprimées, est construit comme un mécanisme indépendant, ces 2 mécanismes n'étant pas reliés directement entre eux, mais fixés séparément sur le châssis (1) chacun par son propre axe (3).

Les 2 courroies (5) peuvent donc débattre indépendamment l'une de l'autre. On réalise ainsi une suspension indépendante, rendant le chariot plus facilement utilisable dans les escaliers en hélice, également appelés escaliers en colimaçon.

Dans cette sixième forme d'exécution, il est bien entendu que le profil curviligne peut être également obtenu suivant les dispositions indiquées dans les deuxième, troisième et quatrième formes d'exécution.

Dans une septième forme d'exécution suivant la présente invention, les deux ensembles indépendants décrits précédemment sont réalisés pour être fixés provisoirement ou définitivement sur un quelconque objet ou charge à déplacer.

La structure portante du chariot selon la présente invention peut être réalisée de différentes façons. En exemples non limitatifs, on peut citer: tubes, plats ou fils acier, tubes, plats, fils ou profilés en alliage léger. Plastique moulé, injecté, stratifié.

Utilisations: le chariot suivant la présente invention est susceptible d'être réalisé sous diverses formes qui n'affectent en rien son esprit inventif et utilisent toujours les principes géométriques de l'invention.

On peut citer: chariot ménager, de manutention, pour: bouteilles de gaz comprimé, fûts, sacs, poubelles. Chariot pour le transport et la manutention de documents, petits matériels pour services d'entretien. Chariot ou diable pour déménageurs ou livreurs.

On peut également citer: chaise ou fauteuil roulant pour malade, blessé, handicapé. Intéressant pour descendre un malade ou blessé de son appartement, s'il n'y a pas d'ascenseur, pour l'installer dans l'ambulance.

Il est à noter qu'avec un fauteuil ou une chaise comportant le système de la présente invention, il suffit d'une seule personne pour descendre un malade ou blessé dans les escaliers. La présente invention doit donc pouvoir être utilisée dans le domaine médical et para-médical.

Autre intérêt du chariot selon l'invention: pas de rupture de charge au cours du trajet: par exemple, dans une usine pour aller du magasin d'entretien jusqu'au lieu d'utilisation: réparation ou changement d'un moteur électrique par exemple.

De plus, la charge est suspendue.

**Revendications**

1. Chariot articulé, type 2 roues, à traction manuelle, pour le transport ou la manutention, destiné à une utilisation tous terrains, y compris les escaliers, constitué par un châssis supérieur (1) qui reçoit la charge et un châssis inférieur (2) qui assure le déplacement et qui comporte, en plus des deux roues (4) habituelles, deux courroies (5) lisses ou crantées se déplaçant dans la partie utile, suivant un profil curviligne indéformable, ce profil pouvant être un arc de cercle, une ellipse, une branche de parabole ou tout autre profil curviligne et, au cas où l'on choisit un arc de cercle, celui-ci constituant une portion de roue de grand diamètre, les deux châssis (1 et 2) étant articulés sur un axe d'oscillation commun (3) leur permettant de pivoter l'un par rapport à l'autre pendant le déplacement du chariot, la courroie (5) étant maintenue sur son profil curviligne par des rouleaux-supports (6) qui empêchent la courroie de se déformer au contact d'un obstacle, caractérisé en ce que le profil curviligne est réalisé sur la face du châssis inférieur (2) qui est située au regard du terrain, en ce que le centre commun d'oscillation (3) des deux châssis (1 et 2) est géométriquement distinct des axes des roues (4), des axes des rouleaux-supports (6) et de ceux des galets (7) et en ce qu'un système de ressorts (8 et 9), à action composite, exerce les fonctions suivantes:

a) Il contrôle le débattement du châssis inférieur (2) et le ramène constamment dans la position convenable par rapport au châssis supérieur (1) et par rapport à l'obstacle à franchir.

b) Il assure la suspension de la charge.

c) Il provoque l'écartement des deux châssis l'un de l'autre quand le chariot est amené en position verticale pour le chargement.

2. Chariot selon la revendication 1, caractérisé par le fait que la traction du chariot se fait par l'intermédiaire du châssis supérieur (1) qui, outre la poignée fixe (11) habituelle, comporte une poignée mobile (12) eclipsable, qui vient s'encliqueter par rapport à la poignée fixe (11), cette poignée (12) devenant alors fixe par rapport au châssis supérieur (1), les deux poignées (11 et 12) pouvant être remplacées par une poignée unique, réglable sur deux positions correspondant aux positions géométriques des poignées (11 et 12) définies ci-dessus.

3. Chariot selon la revendication 1 caractérisé en ce que les deux mécanismes latéraux du système de roulement et de suspension portant la courroie (5) peuvent débattre indépendamment l'un de l'autre.

4. Chariot selon la revendication 1, caractérisé en ce que la courroie (5) est maintenue sur son profil curviligne par un patin ayant même profil extérieur que l'enveloppe géométrique tangente à l'extérieur des rouleaux-supports (6) que ce patin vient remplacer.

5. Chariot selon la revendication 1, caractérisé en ce que les rouleaux-supports (6) et la courroie (5) sont remplacés par un patin curviligne ayant même profil extérieur que cette courroie (5).

6. Chariot selon la revendication 3 caractérisé par le fait que des ensembles indépendants, constitués par un seul des deux mécanismes latéraux du système de roulement et de suspension du châssis inférieur (2) oscillant, y compris son axe d'oscillation (3), sont réalisés en tant qu'éléments isolés pour être fixés provisoirement ou définitivement sur des charges ou objets quelconques.

**Patentansprüche**

1. Handgezogene Gelenkkarre mit zwei Rädern, für Beförderung oder Verladen, zu Benützung in jedem Gelände geeignet, Treppen einbegriffen, bestehend von einem Oberrahmen (1) der die Last trägt, und einem Unterrahmen (2) der die Bewegung ermöglicht und zusätzlich zu den zwei Rädern (4) von zwei glatten oder eingekerbten Riemen (5) besteht, Riemen die sich im tragenden Teil bewegen, ein krummliniges, formbeständiges Profil folgend, dieses Profil kann ein Kreisbogen sein, eine Ellipse, ein Teil einer Parabel oder jedes andere krummlinige Profil, und wenn man einen Kreisbogen wählt so macht dieser einen Teil einem Rad mit grossem Durchmesser aus, die zwei Rahmen (1 und 2) sind auf einer gemeinsamen Pendelachse (3) schwenkbar, was ihnen die Möglichkeit gewährt, während die Bewegung der Karre gegeneinander zu pendeln, der Riemen (5) ist auf seinem krummlinigen Profil mittels Rollehalter (6) festgehalten, Rollehalter die die Verbiegung des Riemens bei Hindernissen verhindern, kennzeichnet davon dass das krummlinige Profil sich auf der Seite des Unterrahmens (2) befindet, die gegen den Boden gewandt ist, dass die gemeinsame Pendelachse (3) der zwei Rahmen (1 und 2) von den Radachsen (4), den Achsen der Rollen (6) und den Achsen der Laufrollen (7) geometrisch verschieden ist, und dass ein vielfältig wirksames Federsystem (8 und 9) die folgende Funktionen hat:

a. Es kontrolliert die Bewegung des Unterrahmens (2) und bringt ihn immer zu passende Lage zurück, im Verhältnis zu dem Oberrahmen (1) und dem Hindernis man zu überschreiten hat.

b. Es versichert die Federung der Last.

c. Es bringt eine gewisse Abstand des Unterrahmens vom Unterrahmen hervor, wenn die Karre in senkrechte Lage gestellt wird.

2. Gelenkkarre gemäss Anspruch 1, kennzeichnet davon dass sie mit dem Oberrahmen (1) gezogen wird, Rahmen der, zusätzlich zu seinem festen üblichen Handgriff (11), mit einem beweglichen, einziehbaren Handgriff (12) ausgerüstet ist, Handgriff der mit dem festen Handgriff (11) eingeschnappt werden kann, dieser Handgriff wird dann mit dem Oberrahmen (1) fest montiert, die zwei Handgriffe (11 und 12) können durch einen einzigen Handgriff, einstellbar und in zwei Lagen einschnappbar, in Uebereinstimmung mit den geometrischen Positionen der Randgriffe (11 und 12) hier oben beschreibt, ersetzt werden.

3. Gelenkkarre gemäss Anspruch 1 kennzeichnet davon dass die zwei seitliche Getriebe des Rollen- und Federungsystems die mit Riemen versehen sind, unabhängig von einander pendeln können.

4. Gelenkkarre gemäss Anspruch 1 kennzeichnet davon dass der Riemen (5) auf seinem krummlinigen Profil mittels einer Gleitschiene festgehalten ist, Gleitschiene die dasselbe aussere Profil hat als die geometrisch tangierende Hüllkurve ausser den Rollehalter (6), die diese Gleitschiene ersetzt.

5. Gelenkkarre gemäss Anspruch 1 kennzeichnet davon dass die Rollenhalter (6) und der Riemen (5) mit einem krummlinigen Gleitschiene ersetzt ist, Gleitschiene die dasselbe aussere Profil hat, als den Riemen (5).

6. Gelenkkarre gemäss Anspruch 3 kennzeichnet davon dass unabhängige Einheite, von einem einzigen der zwei Seitenvorrichtungen des Rollensystems und der Federung des pendelnden Unterrahmens (2), darin eingeschlossen den Pendelachse (3), bestehend, als einzelne Bestandteile verwirklicht werden um vorläufig oder endgültig an Lasten oder irgendeine Gegenstände befestigt zu werden.

**Claims**

1. Articulated two-wheeled manually drawn cart for transporting or handling goods, can be used on any kind of grounds, including stairs, made up of an upper frame (1) which carries the load, and an under frame (2) which ensures the mobility of the device and which, part from the two standard wheels (4) comprises two belts (5), either notched or smooth moving, facing the ground, around a rounded undeformable profile, this profile can be an arc of a circle, an ellipse, a section of a parabola or any other kind of rounded profile, and in case an arc of a circle is chosen, this section being part of a large diameter wheel, the two frames (1 and 2) being articulated round a common oscillation axis (3) allowing one frame to swiwel with regard to the other while the cart is moving, the belt (5) being retained to the rounded profile by roller supports (6) that prevent deformation of the belt when the cart touches an obstacle, characterized by the fact that the rounded profile is placed on the under frame (2), facing the ground, also by the fact that the common oscillation centre (3) of the two frames (1 and 2) is geometrically distinct from the axes of the wheels (4), the axes of the roller supports (6), and the axes of the running wheels (7) an by the fact that a multiple action spring system (8 and 9) ensures the following functions:

a. It controls the moving of the under frame (2) and brings it constantly back to a suitable position with regard to the upper frame (1) and with regard to the obstacle to pass.

b. It ensures the suspension of the load.

c. It creates a distance between the two frames when the cart is brought into vertical position for loading.

2. Cart according to claim 1, characterized by the fact that the cart is drawn by the means of the upper frame (1) which, part from the usual fixed handle (11) comprises a mobile collapsible handle (12) which locks into the fixed handle (11), that handle (12) being then fixed to the upper frame (1), the two handles (11 and 12) can be replaced by one handle only, adjustable and lockable into two positions corresponding to the geometrical positions of the handles (11 and 12) defined here above.

3. Cart according to claim 1, characterized by the fact that the two lateral mechanisms of the drive and suspension system carrying the belt (5) can move independently of each other.

4. Cart according to claim 1, characterized by the fact that the belt (5) is kept on it's rounded profile by a slide rail having the same external profile as the tangential geometric envelope on the outside of the roller supports (6) that this slide rail is replacing.

5. Cart according to claim 1, characterized by the fact that the roller supports (6) and the belt (5) are replaced by a rounded slide rail having the same external profile as the belt (5).

6. Cart according to claim 3, characterized by the fact that independent devices made up of only one of the two lateral mechanisms of the oscillating under frame (2) drive and suspension system, including it's oscillating axis (3), are conceived as isolated elements to be temporarily or permanently fixed on loads or and other kind of objects.

FIG.1

FIG.3

FIG.2

# FIG.4

16

11

4

5

# FIG.5

17

11

4

5

**FIG.6**

11

5

**FIG.7**

12

14

13

11

1

8

9

3

2

5

FIG.8